(19) Europäisches Patentamt
European Patent Office
Office européen des brevets

(11) **EP 4 214 486 B1**

(12) **EUROPÄISCHE PATENTSCHRIFT**

(45) Veröffentlichungstag und Bekanntmachung des Hinweises auf die Patenterteilung:
**28.05.2025  Patentblatt 2025/22**

(21) Anmeldenummer: **21762475.8**

(22) Anmeldetag: **17.08.2021**

(51) Internationale Patentklassifikation (IPC):
**G01N 21/27** *(2006.01)*    **G01N 21/3581** *(2014.01)*
**G01N 21/41** *(2006.01)*

(52) Gemeinsame Patentklassifikation (CPC):
**G01N 21/3581; G01N 21/4133;** G01N 21/274;
G01N 2201/0221

(86) Internationale Anmeldenummer:
**PCT/EP2021/072820**

(87) Internationale Veröffentlichungsnummer:
**WO 2022/058112 (24.03.2022 Gazette 2022/12)**

(54) **VERFAHREN UND VORRICHTUNG ZUM BESTIMMEN DES BRECHUNGSINDEX IM OBERFLÄCHENBEREICH EINES GEGENSTANDES**

METHOD AND DEVICE FOR DETERMINING THE REFRACTIVE INDEX IN THE SURFACE REGION OF AN OBJECT

PROCÉDÉ ET DISPOSITIF DE DÉTERMINATION D'INDICE DE RÉFRACTION DANS LA ZONE DE SURFACE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **17.09.2020  DE 102020124261**

(43) Veröffentlichungstag der Anmeldung:
**26.07.2023  Patentblatt 2023/30**

(73) Patentinhaber: **SIKORA AG**
**28307 Bremen (DE)**

(72) Erfinder:
• **SIKORA, Harald**
**28357 Bremen (DE)**
• **HOLLE, Armin**
**28832 Achim (DE)**

(74) Vertreter: **Hauck Patentanwaltspartnerschaft mbB**
**Postfach 11 31 53**
**20431 Hamburg (DE)**

(56) Entgegenhaltungen:
EP-A1- 3 317 070       EP-B1- 3 317 070
WO-A1-2016/139155     DE-A1- 102018 128 248

**Beschreibung**

Die Erfindung betrifft ein Verfahren und eine Vorrichtung zum Bestimmen des Brechungsindex im Oberflächenbereich eines erhitzt aus einer Produktionsanlage kommenden, noch nicht vollständig auf Umgebungstemperatur erkalteten strang- oder plattenförmigen Gegenstandes.

Beispielsweise in Extrusionsanlagen werden strang- oder plattenförmige Kunststoffgegenstände produziert und entlang einer Förderrichtung gefördert, beispielsweise durch Abkühlstrecken, bis diese vollständig auf Umgebungstemperatur erkaltet und entsprechend vollständig ausgehärtet sind. Unmittelbar nach Austritt aus der Extrusionsanlage und noch über einen weiteren Bereich der Förderstrecke sind derartige Gegenstände noch nicht vollständig erkaltet und damit ausgehärtet.

Aus WO 2016/139155 A1 und DE 10 2018 128 248 A1 sind Verfahren und Vorrichtungen bekannt, mit denen der Brechungsindex von strang- oder plattenförmigen Kunststoffgegenständen anhand Bestrahlens der Gegenstände mit Terahertzstrahlung und Empfangens der von den Gegenständen reflektierten Terahertzstrahlung bestimmt werden kann. Es handelt sich dabei um einen mittleren Brechungsindex über den Querschnitt des Gegenstandes bzw. des durchstrahlten Abschnitts des Gegenstandes. Auf dieser Grundlage können Geometrieparameter des Gegenstandes, zum Beispiel eine Wanddicke von Rohren, zuverlässig auch bei zunächst unbekanntem Brechungsindex bestimmt werden.

Insbesondere bei einem Vermessen der Gegenstände kurz nach Austritt aus der Extrusionsanlage können die so ermittelten Geometrieparameter allerdings von den tatsächlichen Geometrieparametern im vollständig erkalteten Zustand des Gegenstandes abweichen. Zuverlässigere Ergebnisse könnten bei einer späteren Brechungsindex- und Geometrieparameterbestimmung erfolgen, wenn der Gegenstand bereits vollständig erkaltet und ausgehärtet ist. Andererseits besteht der Wunsch, die Geometrieparameter möglichst schnell nach Austritt zum Beispiel aus einer Extrusionsanlage zu bestimmen, um bei fehlerhaften Parametern möglichst schnell in den Produktionsprozess eingreifen und damit Ausschuss minimieren zu können.

Es besteht daher ein Bedürfnis, auch bei einer Messung des Gegenstandes im noch nicht vollständig erkalteten und damit ausgehärteten Zustand eine genaue Brechungsindexbestimmung zu ermöglichen.

Die eingangs erläuterten, aus dem Stand der Technik bekannten Methoden zur Brechungsindexbestimmung sind darüber hinaus beispielsweise bei tragbaren Messvorrichtungen, sogenannten Handheld-Geräten, nicht optimal geeignet, den Brechungsindex zuverlässig zu bestimmen. Es besteht somit ein weiteres Bedürfnis, auch bei solchen Anwendungsfällen eine zuverlässige Brechungsindexbestimmung zu ermöglichen.

Ausgehend von dem erläuterten Stand der Technik liegt der Erfindung daher die Aufgabe zugrunde, auch im noch nicht vollständig erkalteten Zustand des Gegenstandes eine zuverlässige Brechungsindexbestimmung zu ermöglichen.

WO 2017/000933 A1 beschreibt ein Verfahren und eine Vorrichtung zur Ermittlung einer Schichteigenschaft einer Schicht in einem Extrusionsprozess. Dabei wird ein Extrusionsprodukt mit elektromagnetischer Strahlung bestrahlt und eine elektromagnetische Messung zumindest einer durch die zu ermittelnde Schicht gelangten Strahlung durchgeführt. Weiterhin wird mindestens eine Zuführrate oder Zuführmenge eines Zuführmaterials zu einer Extrusionsvorrichtung gemessen und mindestens eine Schichteigenschaft der zu ermittelnden Schicht aus der gemessenen Zuführmenge und der elektromagnetischen Messung ermittelt.

Die Erfindung löst die Aufgabe durch die unabhängigen Ansprüche 1 und 11. Vorteilhafte Ausgestaltungen finden sich in den abhängigen Ansprüchen, der Beschreibung und den Figuren.

Für ein Verfahren der eingangs genannten Art löst die Erfindung die Aufgabe durch die Schritte

a) Terahertzstrahlung wird unter einem Einfallswinkel auf die Oberfläche des Gegenstandes ausgesandt,
b) von der Oberfläche des Gegenstandes reflektierte Terahertzstrahlung wird empfangen,
c) aus dem Verhältnis von eingestrahlter und reflektierter Terahertzstrahlung wird der Brechungsindex im Oberflächenbereich des Gegenstandes bestimmt,
d) bei der Bestimmung des Brechungsindex wird ein Einfluss der Oberflächeneigenschaften des Gegenstandes auf den Anteil reflektierter Terahertzstrahlung berücksichtigt.

Eine Vorrichtung der eingangs genannten Art zur Lösung der Aufgabe umfasst:

- einen Sender zum Senden von Terahertzstrahlung unter einem Einfallswinkel auf die Oberfläche des Gegenstandes,
- einen Empfänger zum Empfangen der von der Oberfläche des Gegenstandes reflektierten Terahertzstrahlung,
- eine Auswerteeinrichtung, die dazu ausgebildet ist, aus dem Verhältnis von eingestrahlter und reflektierter Terahertzstrahlung den Brechungsindex im Oberflächenbereich des Gegenstandes zu bestimmen,
- wobei die Auswerteeinrichtung weiter dazu ausgebildet ist, bei der Bestimmung des Brechungsindex einen Einfluss der Oberflächeneigenschaften des Gegenstandes auf den Anteil reflektierter Terahertzstrahlung zu berücksichtigen.

Der erfindungsgemäß untersuchte Gegenstand befindet sich in einem erhitzt aus einer Produktionsanlage kommenden, noch nicht vollständig auf Umgebungstemperatur erkalteten Zustand. Er kann entsprechend in seinem Inneren noch nicht vollständig ausgehärtete, zähflüssige Bestandteile aufweisen, die erst im Zuge einer weiteren Abkühlung aushärten. Der Oberflächenbereich des Gegenstandes ist dagegen bereits ausgehärtet. Im Zuge der weiteren Erkaltung und damit Aushärtung kommt es zu einer Schrumpfung des Materials. Die Produktionsanlage kann zum Beispiel eine Extrusionsanlage sein. Der Gegenstand kann entsprechend ein in einer Extrusionsanlage extrudierter Gegenstand sein. Der Gegenstand kann zum Beispiel ein Kunststoffgegenstand. Es kann sich bei dem Gegenstand beispielsweise um ein Rohr handeln. Weiterhin kann der Gegenstand während der erfindungsgemäßen Terahertzbestrahlung entlang einer Förderrichtung gefördert werden, zum Beispiel ein strangförmiger Gegenstand entlang seiner Längsachse. Hierzu kann die erfindungsgemäße Vorrichtung eine Fördereinrichtung aufweisen. Die erfindungsgemäße Vorrichtung kann im Übrigen auch den Gegenstand selbst umfassen.

Bei der Erfindung wird Terahertzstrahlung unter einem als bekannt angenommenen Einfallswinkel auf die Oberfläche des Gegenstandes ausgesandt. Die Oberfläche des Gegenstandes reflektiert die einfallende Terahertzstrahlung abhängig von ihrem Reflexionsgrad zumindest teilweise. Die reflektierte Terahertzstrahlung wird von einem Empfänger empfangen. Die Terahertzstrahlung kann zum Beispiel in einem Frequenzbereich von 10 GHz bis 3 THz liegen. Es kann sich um sogenannte Millimeterwellen handeln. Ein die Terahertzstrahlung aussendender Sender und ein die reflektierte Terahertzstrahlung empfangender Empfänger können im Wesentlichen an demselben Ort angeordnet sein. Sie können zum Beispiel gemeinsam in einen Transceiver integriert sein.

Der Erfindung liegt zunächst der Gedanke zugrunde, dass in dem bereits weitgehend erkalteten und damit ausgehärteten Oberflächenbereich des Gegenstandes eine zuverlässige Brechungsindexbestimmung möglich ist. Dem wiederum liegt die Erkenntnis zugrunde, dass ein noch nicht vollständig erkalteter Gegenstand noch zähflüssige Anteile besitzt, wobei zwischen diesen zähflüssigen Anteilen und bereits ausgehärteten Anteilen ein schmaler Übergangsbereich besteht, die sogenannte Rekristallisationszone. Insgesamt liegen somit drei unterschiedliche Schichtarten vor, deren Eigenschaften bezüglich der Dichte und Festigkeit und damit auch bezüglich des Brechungsindex deutliche Unterschiede aufweisen. Sofern also bei einem noch zähflüssige Anteile aufweisenden Gegenstand in der eingangs zum Stand der Technik erläuterten Weise ein mittlerer Brechungsindex über den gesamten Querschnitt ermittelt wird, kann dies insbesondere mit Bezug auf die noch zähflüssigen Anteile zu Werten für den Brechungsindex führen, die nicht dem Brechungsindex des Materials im vollständig ausgehärteten Zustand entsprechen. Dies kann sich entsprechend verfälschend auf die Bestimmung von Geometrieparametern, wie zum Beispiel die Wanddicke von Rohren, auswirken.

Untersuchungen der Anmelderin haben ergeben, dass sich im Zuge des weiteren vollständigen Abkühlens und damit Aushärtens eines noch zähflüssige Anteile aufweisenden Rohres sowohl die Länge als auch der Durchmesser des Rohres beim weiteren Abkühlen bis auf Umgebungstemperatur nur unerheblich ändern, nämlich weniger als 1 %. Dennoch kann eine Schrumpfung des Rohrmaterials im Zuge des vollständigen Abkühlens und Aushärtens von ca. 10 % festgestellt werden. Daraus kann geschlossen werden, dass diese Schrumpfung im Wesentlichen vollständig durch den noch zähflüssigen Anteil des Materials des Gegenstandes verursacht ist. Da sich der Brechungsindex eines Materials mit der Dichte des Materials ändert, führt also die Bestimmung eines mittleren Brechungsindex bei noch zähflüssige Anteile aufweisenden Gegenständen zu potentiellen Messfehlern. Vermieden werden kann dies durch Messung des Brechungsindex im bereits vollständig erkalteten und damit ausgehärteten Oberflächenbereich des Gegenstandes, wie dies erfindungsgemäß vorgesehen ist.

Zur Messung des Brechungsindex im Oberflächenbereich wird grundsätzlich auf die bekannten Fresnelschen Formeln zurückgegriffen, mit deren Hilfe bei bekanntem Einfallswinkel aus dem Verhältnis der von der Oberfläche des Gegenstandes reflektierten Terahertzstrahlung zu der auf die Oberfläche ausgesandten Terahertzstrahlung der Brechungsindex im Oberflächenbereich, insbesondere an der Oberfläche des Gegenstandes, berechnet werden kann. Der dabei benötigte Reflexionsgrad des Gegenstandes, also das Verhältnis von reflektierter Strahlungsleistung zu eingestrahlter Strahlungsleistung, kann bei bekannter eingestrahlter Strahlungsleistung aus dem Anteil der empfangenen reflektierten Strahlung ermittelt werden. Der Reflexionsgrad beschreibt dabei einen rechnerischen Zusammenhang zwischen den Brechungsindizes im Oberflächenbereich des Gegenstandes und der Umgebung des Gegenstandes. Der Brechungsindex der Umgebung des Gegenstandes ist bekannt und kann bei Luft als 1 angenommen werden. Der Einfallswinkel kann im einfachsten Fall 0° betragen, also Normaleinfall der Strahlung. Dann vereinfachen sich die Fresnelschen Formeln zu:

$$R = \left| \frac{n_1 - n_2}{n_1 + n_2} \right|^2$$

mit

R: Reflexionsgrad
$n_1$: Brechungsindex der Umgebung des Gegenstandes (bei Luft = 1)
$n_2$: Brechungsindex des Oberflächenbereichs des Gegenstandes.

Weitere Untersuchungen der Erfinder haben allerdings gezeigt, dass die Anwendung dieser Methode zur Brechungsindexbestimmung eines erhitzt aus einer Produktionsanlage kommenden, noch nicht vollständig erkalteten strang- oder plattenförmigen Gegenstandes unter Verwendung von Terahertzstrahlung sehr komplex ist. Dies gilt insbesondere für die Bestimmung des Anteils der reflektierten Strahlung in Bezug zu der eintreffenden Strahlung. So hat sich herausgestellt, dass sich der Betrag der eintreffenden Terahertzstrahlungsintensität erheblich mit der Entfernung zum Gegenstand und der von der Oberfläche zurückreflektierte Teil der Terahertzstrahlung sich abhängig von der Ausrichtung und insbesondere der Oberfläche des Gegenstandes erheblich ändert.

Der Abstand zum Gegenstand und eine etwaige Krümmung lassen sich durch einen umsichtigen Messaufbau gut einstellen bzw. berücksichtigen. Anders ist dies bei der im Rahmen des Messaufbaus kaum zu beeinflussenden Oberfläche des Gegenstandes. Um diesem insbesondere bei der Verwendung von Terahertzstrahlung bestehenden Problem zu begegnen, ist vorgesehen, dass bei der erfindungsgemäßen Bestimmung des Brechungsindex ein Einfluss der Oberflächeneigenschaften des Gegenstandes auf den Anteil reflektierter Terahertzstrahlung berücksichtigt wird. Damit können den reflektierten Anteil verändernde Einflüsse der Oberfläche berücksichtigt und entsprechende Verfälschungen des Ergebnisses der Brechungsindexbestimmung vermieden werden. Beispielsweise kann auf diese Weise immer eine möglichst senkrechte Einstrahlung und damit Reflexion der Terahertzstrahlung, also unter einem Einfallswinkel von 0°, erreicht werden. Als eine Eingangsgröße bei der Brechungsindexbestimmung mit den Fresnelschen Formeln ist ein auch bei schwierigen oder unbekannten Oberflächenverhältnissen des Gegenstandes zuverlässig eingestellter Einfallswinkel von großer Bedeutung.

Es sei darauf hingewiesen, dass der Brechungsindex auch von der Frequenz der verwendeten Terahertzstrahlung abhängig. Sofern vorliegend also von dem Brechungsindex gesprochen wird, bezieht sich dies auf den Brechungsindex für die verwendete Frequenz der Terahertzstrahlung.

Bei der Erfindung wird in Schritt d) ein Einfluss der Oberflächentopographie des Gegenstandes berücksichtigt. Dieser Ausgestaltung liegt der Gedanke zugrunde, dass insbesondere eine unregelmäßige Oberflächentopographie, zum Beispiel Dellen, Hügel, Riefen o.ä., dazu führen, dass der als bekannt angenommene Einfallswinkel, zum Beispiel von 0°, von dem tatsächlichen Einfalls- und damit Ausfallswinkel abweicht. Dies kann durch eine Berücksichtigung der Oberflächentopographie vermieden werden.

Nach einer weiteren Ausgestaltung kann in Schritt d) eine Kalibrierung gegenüber einem Gegenstand mit einem bekannten Reflexionsgrad, bevorzugt einem Reflexionsgrad von im Wesentlichen 1, erfolgen. Die Oberfläche des Gegenstandes kann für die Kalibrierung mit einer Beschichtung mit einem bekannten Reflexionsgrad, bevorzugt einem Reflexionsgrad von im Wesentlichen 1, versehen werden. Der für die Kalibrierung genutzte Gegenstand kann der hinsichtlich seines Oberflächenbrechungsindex zu bestimmende Gegenstand, also der aus der Produktionsanlage kommende Gegenstand, selbst sein. Es wird dann davon ausgegangen, dass sich die Oberflächentopographie beispielsweise eines während der Terahertzbestrahlung entlang einer Förderrichtung geförderten Gegenstandes in seiner Förderrichtung, zum Beispiel seiner Längsrichtung, nicht wesentlich ändert. Dies ist zum Beispiel für aus einer Extrusionsanlage kommende Gegenstände in guter Näherung möglich. Beispielsweise kann zu Kalibrierungszwecken die Oberfläche des zu messenden Gegenstandes so behandelt werden, dass sie einen definierten, bevorzugt möglichst hohen Reflexionsgrad besitzt, zum Beispiel einen Reflexionsgrad von 1. Zum Beispiel kann die Beschichtung eine Folienbeschichtung oder eine Sprühbeschichtung sein. Eine Folie könnte zum Beispiel eine dünne Metallfolie sein. Eine Sprühbeschichtung könnte zum Beispiel eine Wassersprühbeschichtung oder eine Beschichtung mit einer anderen Flüssigkeit mit hohem Reflexionsgrad sein.

Erfolgt eine erfindungsgemäße Messung unter einer bestimmten Ausrichtung des Senders (und Empfängers) für die Terahertzstrahlung, kann aus dem reflektierten Strahlungsanteil auf den (tatsächlichen) Einfallswinkel der Terahertzstrahlung geschlossen werden, da der reflektierte Strahlungsanteil bei Normaleinfall dem bekannten Reflexionsgrad von zum Beispiel 1 entsprechen müsste. Kommt es hier zu Abweichungen, kann entsprechend auf eine Abweichung zu dem angenommenen Einfallswinkel von 0° geschlossen werden. Auch wäre es denkbar, anhand der so bereitgestellten Oberfläche den Normaleinfall durch eine entsprechende Neuausrichtung des Senders (und Empfängers) zu finden, indem die Ausrichtung des Senders (und Empfängers) gesucht wird, bei der der reflektierte Strahlungsanteil dem bekannten Reflexionsgrad, zum Beispiel etwa 1, bestmöglich entspricht. Eine Kalibrierung am tatsächlich zu messenden Gegenstand liefert die besten Ergebnisse, da die Kalibrierung anhand der tatsächlichen Oberflächentopographie des Gegenstandes erfolgt. Sofern allerdings in guter Näherung davon ausgegangen werden kann, dass der Gegenstand in seiner Form, einschließlich seiner Oberflächentopographie, mit einem anderen Gegenstand mit einem bekannten Reflexionsgrad, zum Beispiel einem Metallstrang, insbesondere einem Metallrohr oder eine Metallplatte, übereinstimmt, könnte für die Kalibrierung auch ein solcher, von dem zu messenden Gegenstand unterschiedlicher Gegenstand verwendet werden. Die Ausrichtung von Sender und Empfänger zu dem für die Kalibrierung genutzten Gegenstand (Entfernung etc.) muss dabei möglichst genau mit der bei dem tatsächlich zu messenden Gegenstand übereinstimmen. Die beschriebene Kalibrierung kann dabei sowohl vor als auch nach der erfindungsgemäßen Bestimmung des Brechungsindex des unbehandelten Gegenstandes erfolgen. Um einen Einfluss einer Oberflächenbehandlung auf das Ergebnis der Brechungsindexbestimmung zu vermeiden, kann es bevorzugt sein, die Kalibrierung nach der erfindungsgemäßen Bestimmung des Brechungsindex des unbehandelten Gegenstandes durchzuführen. In diesem Fall erfolgt naturgemäß keine Neuausrichtung des Senders und Empfängers.

Bei der Erfindung wird in Schritt d) Terahertzstrahlung auf unterschiedliche Orte auf der Oberfläche des Gegenstandes und/oder unter unterschiedlichen Einfallswinkeln auf die Oberfläche des Gegenstandes ausgesandt, wobei die jeweils reflektierte Terahertzstrahlung empfangen wird, und wobei der Brechungsindex aus dem Anteil reflektierter Terahertzstrahlung mit der größten Intensität bestimmt wird. Es erfolgt somit eine Suche des Maximums an reflektierter Strahlungsleistung bei unterschiedlichen Ausrichtungen des Senders (und Empfängers) für die Terahertzstrahlung, also eine Suche nach dem Normaleinfall. Es wird dann davon ausgegangen, dass im Bereich des Maximums der reflektierten Strahlungsleistung der Einfallswinkel im Wesentlichen 0° entspricht. Nach einer weiteren diesbezüglichen Ausgestaltung kann ein Sender (und ein Empfänger) für die Terahertzstrahlung während des Aussendens der Terahertzstrahlung um mindestens eine Schwenkachse geschwenkt werden und/oder um den Gegenstand rotiert werden. Grundsätzlich denkbar sind dabei zum Beispiel Kreisbahnen um einen rohrförmigen Gegenstand, eindimensionales oder zweidimensionales Verändern des Einfallswinkels oder zum Beispiel Pendelbewegungen von Sender und Empfänger. Jeweils kann das Intensitätsmaximum ermittelt und der Brechungsindexbestimmung zugrunde gelegt werden. Dabei kann zum Beispiel eine elektronische oder mechanische (schnelle) Verkippung oder ein spiralförmiges Kreisen von Sender und Empfänger erfolgen. Denkbar sind insoweit beispielsweise sogenannte Galvo-Scanner. Das Intensitätsmaximum kann grundsätzlich durch einen Fit, beispielsweise das Fitten einer Hüllkurve, bestimmt werden. Denkbar ist diese Ausgestaltung insbesondere auch bei Handheld-Geräten, bei denen unter Verwendung von Vorrichtungen zum schnellen Scannen der Oberfläche des Gegenstandes, insbesondere schnell im Vergleich zu einem unvermeidbaren Wackeln der das Handheld-Gerät tragenden Hand, auf eine entsprechende Auflage für das Handheld-Gerät verzichtet werden kann. Natürlich wäre es grundsätzlich auch denkbar, mehrere Sender und Empfänger vorzusehen, die sämtlich Terahertzstrahlung auf die Oberfläche des Gegenstandes aussenden und reflektierte Strahlung empfangen, zum Beispiel auf unterschiedliche Orte oder über den Umfang des Gegenstandes verteilt angeordnet. Wiederum wird bei der Erfindung dann die reflektierte Strahlung mit der höchsten Intensität für die weitere Auswertung genutzt.

Zusätzlich oder alternativ zu der Ermittlung des Maximums wäre es auch möglich, den Brechungsindex aus dem Mittelwert der empfangenen reflektierten Terahertzstrahlung zu bestimmen oder aus dem quadratischen Mittelwert der empfangenen reflektierten Terahertzstrahlung zu bestimmen.

Nach einer weiteren Ausgestaltung kann zusätzlich der mittlere Brechungsindex über den Querschnitt des Gegenstandes bestimmt werden. Der mittlere Brechungsindex kann ebenfalls aus auf dem Gegenstand ausgesandter und von dem Gegenstand reflektierter Terahertzstrahlung bestimmt werden, wobei in diesem Fall auch Strahlungsanteile empfangen und ausgewertet werden, die den Gegenstand zumindest teilweise durchstrahlt haben und von inneren Grenzflächen des Gegenstandes reflektiert wurden. Die diesbezügliche Brechungsindexbestimmung kann zum Beispiel erfolgen wie beschrieben in WO 2016/139155 A1 oder DE 10 2018 128 248 A1. Auf diese Druckschriften wird insoweit Bezug genommen. Vorteilhaft ist dabei, dass dieselbe Mess- und Auswerteeinrichtung genutzt werden kann, insbesondere dieselben Sender und Empfänger, wie zur Bestimmung des Brechungsindex im Oberflächenbereich des Gegenstandes. Es versteht sich, dass reflektierte Signale von verschiedenen Oberflächen zeitlich, bzw. über die Frequenz diskriminiert werden können, so dass diese einzeln für die Vermessung ausgewertet werden können. Die Terahertzstrahlung kann daher insbesondere im FMCW-Betrieb (Frequenzmoduliertes Dauerstrichradar) oder im Puls-Betrieb ausgesandt werden. Nach einer weiteren Ausgestaltung kann aus einem Vergleich des mittleren Brechungsindex mit dem Brechungsindex im Oberflächenbereich des Gegenstandes auf eine Schrumpfung des Gegenstandes im Zuge seiner vollständigen Erkaltung auf Umgebungstemperatur geschlossen werden. Der Brechungsindex eines Materials ist unter anderem temperaturabhängig, insbesondere abhängig von der Dichte des Materials. Noch zähflüssige Anteile besitzen eine geringere Dichte als vollständig erkaltete Bereiche, so dass auch der Brechungsindex solcher noch zähflüssigen Anteile geringer ist. Entsprechend kann aus einer Differenz zwischen dem auch die zähflüssigen Bereiche berücksichtigenden mittleren Brechungsindex und dem diese Bereiche nicht berücksichtigenden Oberflächenbrechungsindex auf das Vorhandensein und den Anteil zähflüssiger Bereiche und daraus zuverlässig auf eine erwartete Schrumpfung geschlossen werden. Dies gilt dabei auch wenn im Wesentlichen unmittelbar nach Austritt aus einer Produktionsanlage, wie einer Extrusionsanlage, gemessen wird.

Nach einer weiteren Ausgestaltung kann in Schritt d) mit einer Finite-Elemente-Methode und unter Berücksichtigung der Abstrahlcharakteristik eines Senders für die Terahertzstrahlung sowie des Abstands des Senders zu dem Gegenstand die zu erwartende Intensität der von dem Gegenstand reflektierten Terahertzstrahlung bestimmt werden. Dieser erwartete Anteil reflektierter Terahertzstrahlung entspricht dabei insbesondere dem Anteil bei Normaleinfall, also Einfallswinkel = Ausfallswinkel = 0°. Weicht die tatsächlich gemessene reflektierte Strahlung in ihrer Intensität von dem erwarteten Wert ab, kann auf eine Abweichung von dem angenommenen Einfallswinkel von 0° geschlossen werden und dies rechnerisch berücksichtigt werden oder im Messaufbau korrigiert werden.

Nach einer weiteren Ausgestaltung kann aus dem bestimmten Brechungsindex im Oberflächenbereich des Gegenstandes die Temperatur im Oberflächenbereich des Gegenstandes bestimmt werden. Wie erläutert, ist der Brechungsindex temperaturabhängig. Damit kann aus dem bestimmten Brechungsindex auf die Temperatur an der Position bzw. am Ort der Brechungsindexbestimmung geschlossen werden kann.

Nach einer weiteren Ausgestaltung kann der Gegenstand ein Rohr sein, wobei weiterhin von einer inneren Oberfläche eines Wandabschnitts des Rohrs reflektierte Terahertzstrahlung empfangen wird, und wobei aus dem Verhältnis von eingestrahlter und von der inneren Oberfläche des Wandabschnitts reflektierter Terahertzstrahlung der Brechungsindex an der inneren Oberfläche des Wandabschnitts bestimmt wird. Es versteht sich, dass dabei auch eine etwaige Dämpfung der Terahertzstrahlung auf dem Weg durch das Material berücksichtigt werden muss.

Nach einer weiteren diesbezüglichen Ausgestaltung kann aus dem Brechungsindex an der inneren Oberfläche des Wandabschnitts die Temperatur an der inneren Oberfläche des Wandabschnitts und/oder eine Temperaturdifferenz und/oder ein Temperaturgradient zwischen der Temperatur der inneren Oberfläche des Wandabschnitts und der Temperatur im (äußeren) Oberflächenbereich des Gegenstandes bestimmt werden. Durch solche Temperaturbetrachtungen können zum Beispiel Material-(Chargen-)Änderungen erkannt und rechnerisch eliminiert werden, so dass die erfindungsgemäße Brechungsindexbestimmung unabhängig von solchen Änderungen wird. Eine Betrachtung einer Temperaturdifferenz bzw. eines Temperaturgradienten ist im Übrigen von besonderem Interesse bei Materialien, deren Zusammensetzung und damit Brechungsindex sich im Querschnitt, beispielsweise durch eine Rohrwand hindurch, verändert. Dies ist zum Beispiel bei geschäumtem Material mit stärker reflektierenden Grenzflächen der Fall. Grundsätzlich ließen sich mit der Erfindung auch Brechungsindizes mehrerer unterschiedlicher Materialschichten in einem Material bestimmen, insbesondere bei einem Schichtaufbau des Gegenstandes. Hierzu kann an den Grenzschichten zwischen den Schichten reflektierte Terahertzstrahlung für die Brechungsindexbestimmung ausgewertet werden.

Es ist weiterhin denkbar, aus der bestimmten Temperatur im Oberflächenbereich des Gegenstandes und der bestimmten Temperatur an der inneren Oberfläche des Wandabschnitts eine mittlere Temperatur des Gegenstandes zu bestimmen. Auch wäre es denkbar, aus dem bestimmten mittleren Brechungsindex über den Querschnitt des Gegenstandes eine mittlere Temperatur des Gegenstandes zu bestimmen. Die beiden bestimmten mittleren Temperaturen des Gegenstandes können dann verglichen werden. Aus dem Vergleich kann auf veränderte Materialeigenschaften des Gegenstandes geschlossen werden, zum Beispiel Änderungen des Materials, der Beimischung von Bestandteilen, einer Chargenänderung etc. Auch wäre es denkbar, die Temperatur im Oberflächenbereich des Gegenstandes mittels einer materialunabhängigen Temperaturmesseinrichtung, zum Beispiel einem Pyrometer, zu messen. Aus der gemessenen Temperatur und der bestimmten Temperaturdifferenz zwischen der Temperatur der inneren Oberfläche des Wandabschnitts und der Temperatur im Oberflächenbereich des Gegenstandes kann die Temperatur an der inneren Oberfläche des Wandabschnitts bestimmt werden. Damit kann die absolute materialunabhängige Innentemperatur bestimmt werden ohne im Innenraum eine entsprechende Temperaturmesseinrichtung vorsehen zu müssen, was in der Praxis oftmals auch nicht möglich ist.

Aus den so ermittelten absoluten Oberflächentemperaturen an der äußeren und inneren Oberfläche beispielsweise eines Wandabschnitts eines Rohrs kann anhand eines Vergleichs mit einer mittleren Temperatur, bestimmt zum Beispiel aus dem wie oben erläutert bestimmten mittleren Brechungsindex bei entsprechenden Auftreten von Differenzen auf Materialänderungen, wie Beimischungen anderer Materialien, neue Chargen etc. geschlossen werden.

Grundsätzlich wäre es zur Berücksichtigung der Oberflächeneigenschaften, insbesondere der Oberflächentopographie, des Gegenstandes auch möglich, die Oberfläche zusätzlich optisch, beispielsweise mittels Laserstrahlung, zu vermessen. Etwaige topographische Strukturen der Oberfläche könnten dann bei der erfindungsgemäßen Bestimmung des Oberflächenbrechungsindex berücksichtigt werden. Zur Vermessung könnte zum Beispiel Lasertriangulation zum Einsatz kommen.

Auch das Vorsehen eines Reflektors auf der dem Sender und Empfänger gegenüberliegenden Seite des Gegenstandes kann vorteilhaft sein, um das Messergebnis von schwankender Intensität des Senders bzw. schwankender Empfindlichkeit des Empfängers unbeeinflusst zu halten.

Bei der erfindungsgemäßen Vorrichtung kann es sich gemäß einer weiteren Ausgestaltung um eine Handheld-Vorrichtung, also ein manuell tragbares Gerät handeln. Auf diese Weise kann zuverlässig in besonders einfacher Weise der Brechungsindex von außen bestimmt werden, wobei die Erfindung auch bei Verwendung eines Handheld-Geräts eine zuverlässige Messung ermöglicht.

Die erfindungsgemäße Vorrichtung, insbesondere ihre Auswerteeinrichtung, kann zur Durchführung des erfindungsgemäßen Verfahrens ausgebildet sein. Entsprechend kann das erfindungsgemäße Verfahren mit der erfindungsgemäßen Vorrichtung durchgeführt werden.

Ein Ausführungsbeispiel der Erfindung wird nachfolgend anhand von Figuren näher erläutert. Es zeigen schematisch:

Figur 1   eine erfindungsgemäße Vorrichtung in einer ersten Ansicht,

Figur 2   die erfindungsgemäße Vorrichtung aus Figur 1 in einer zweiten Ansicht, und

Figur 3   ein Diagramm zur Veranschaulichung des Einflusses der Oberflächentopographie eines untersuchten Gegenstandes.

Soweit nichts anderes angegeben ist, bezeichnen in den Figuren gleiche Bezugszeichen gleiche Gegenstände.

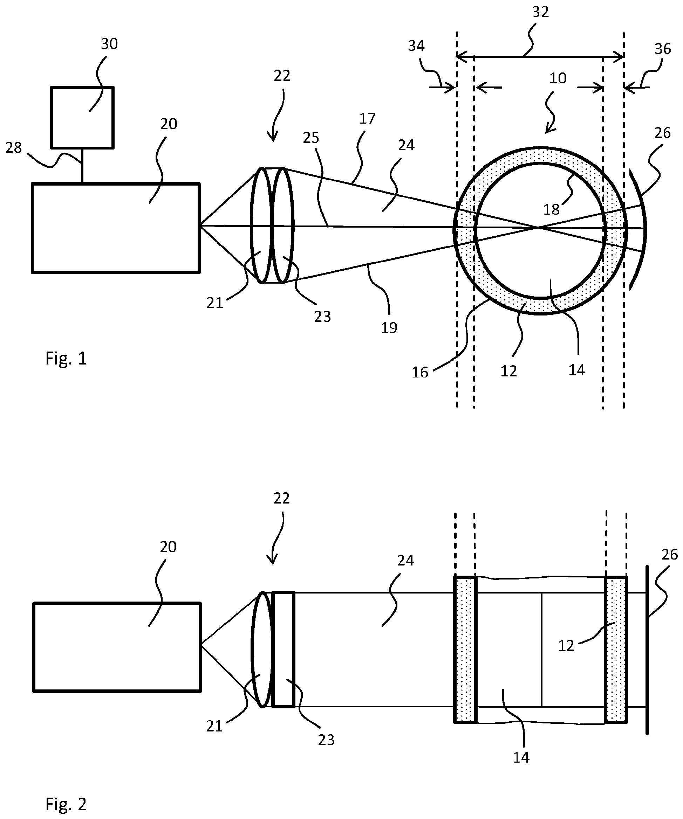

In Fig. 1 ist eine erfindungsgemäße Vorrichtung in einer vertikalen Schnittansicht gezeigt. In Fig. 2 ist die Vorrichtung aus Fig. 1 in einer horizontalen Schnittansicht gezeigt. Bei dem in den Figuren 1 und 2 gezeigten Ausführungsbeispiel wird ein erhitzt aus einer Produktionsanlage, beispielsweise einer Extrusionsanlage, kommender, noch nicht vollständig auf Umgebungstemperatur erkalteter Gegenstand 10, der im Bereich seiner Oberflächen bereits weitgehend erkaltet und vollständig ausgehärtet ist, in seinem Inneren jedoch noch zähflüssige Anteile aufweist, mittels einer geeigneten, nicht näher dargestellten Fördereinrichtung entlang seiner in Fig. 1 senkrecht in die Zeichenebene hineinzeigenden und in Fig. 2 von unten nach oben zeigenden zentralen Längsachse (Zylinderachse) durch die Vorrichtung gefördert. Bei dem Gegenstand 10 handelt es sich vorliegend um ein kreiszylindrisches Kunststoffrohr 10. Der kreisförmige Querschnitt des Rohrs 10 ist in der in Fig. 1 gezeigten Querschnittsdarstellung gut erkennbar. Insbesondere besitzt die Wand 12 des Rohrs 10 eine im Querschnitt kreisförmige äußere Oberfläche 16 und eine im Querschnitt ebenfalls kreisförmige innere Oberfläche 18, die den Hohlraum 14 begrenzt.

Die in den Figuren 1 und 2 gezeigte erfindungsgemäße Vorrichtung umfasst weiterhin einen Sender zum Aussenden von Terahertzstrahlung und einen Empfänger zum Empfangen der von dem Sender ausgesandten und von Grenzflächen des Rohrs 10 reflektierten Terahertzstrahlung, wobei der Sender und Empfänger in dem dargestellten Beispiel durch einen Terahertz-Transceiver 20 gebildet sind. Natürlich könnten auch räumlich getrennte Sender und Empfänger vorgesehen sein, beispielsweise einander gegenüberliegend. Bei dem Bezugszeichen 22 ist schematisch eine Strahlungsoptik, vorliegend umfassend eine Bikonvexlinse 21 und eine Zylinderlinse 23 für die Terahertzstrahlung dargestellt. Natürlich sind auch andere Strahlungsoptiken denkbar. Beispielsweise könnte eine kombinierte Bikonvex-/Zylinderlinse zum Einsatz kommen. Außerdem ist in den Figuren 1 und 2 erkennbar, dass die optische Achse 25 des aus dem Transceiver 20 und der Strahlungsoptik 22 gebildeten optischen Systems senkrecht zur Längsachse des Rohrs 10 liegt. Der Sender und Empfänger bzw. der Transceiver 20 sind weiterhin über eine Leitung 28 mit einer Auswerteeinrichtung 30 verbunden. Es wird darauf hingewiesen, dass die Strahlung nicht ins Zentrum des Rohrs 10 fokussiert sein muss, sondern eine beliebige andere Strahlcharakteristik haben kann, insbesondere auch parallele Strahlung ausgesandt werden könnte. Weiterhin ist es möglich, dass mittels einer geeigneten Einstelleinrichtung die ausgesandte Strahlung kontrolliert in seiner Richtung verändert werden kann.

Bei dem Bezugszeichen 26 ist ein zylindrisch gewölbter Reflektor für die Terahertzstrahlung gezeigt, dessen Längsachse in Richtung der Längsachse des durch die Vorrichtung geführten Rohrs 10 verläuft. Der Krümmungsmittelpunkt des Reflektors 26 fällt mit dem Krümmungsmittelpunkt des zu vermessenden Rohrs 10 zusammen, so dass die Brennlinie des zylindrischen Reflektors 26 mit der Längsachse des Rohrs 10 zusammenfällt. Der Reflektor 26 verstärkt das Messsignal und erlaubt eine noch bessere Diskriminierung der unterschiedlichen von dem Empfänger empfangenen Messsignale. Außerdem hilft er etwaige Schwankungen in der Sendeleistung oder Empfangsempfindlichkeit von Sender und Empfänger auszugleichen. Es wird darauf hingewiesen, dass der Reflektor 26 auch eine andere Geometrie besitzen kann. Auch wäre es natürlich möglich, auf den Reflektor 26 ganz zu verzichten.

Mit der in den Figuren 1 und 2 gezeigten erfindungsgemäßen Vorrichtung, insbesondere dem Transceiver 20, wird Terahertzstrahlung auf die äußere Oberfläche 16 des Rohrs 10 ausgesandt, möglichst unter einem Einfallswinkel von 0°. Wiederum von dem Transceiver 20 wird von der Oberfläche 16 des Gegenstandes reflektierte Terahertzstrahlung empfangen. Mittels der Auswerteeinrichtung 30 wird aus dem Verhältnis von eingestrahlter und reflektierter Terahertzstrahlung der Brechungsindex im Oberflächenbereich, insbesondere der äußeren Oberfläche 16 des Rohrs 10 bestimmt. Die Berechnung des Brechungsindex kann dabei insbesondere in der oben erläuterten Weise unter Heranziehung der Fresnelschen Formeln erfolgen.

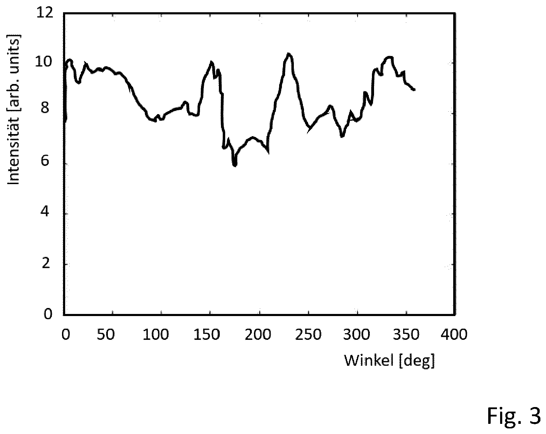

Das in Figur 3 dargestellte Diagramm soll die grundsätzlichen Probleme bei diesem Vorgehen veranschaulichen. Hierfür wurde testweise für ein vollständig erkaltetes und ausgehärtetes kreiszylindrisches Kunststoffrohr 10 die in den Figuren 1 und 2 gezeigte Vorrichtung um 360° um das Kunststoffrohr 10 rotiert, wobei jeweils Terahertzstrahlung auf die äußere Oberfläche 16 des Kunststoffrohrs 10 ausgesandt und von dieser Oberfläche 16 reflektierte Terahertzstrahlung empfangen wurde, wiederum mit dem Transceiver 20. Unter der Annahme, dass das Kunststoffrohr 10 einen weitgehend homogenen Brechungsindex besitzt, dürfte die gemessene Intensitätsamplitude der reflektierten Terahertzstrahlung nur minimal durch die Rotation beeinträchtigt werden.

In Figur 3 ist die von dem Transceiver 20 im Zuge der Rotation tatsächlich empfangene Intensitätsamplitude der reflektierten Terahertzstrahlung dargestellt. Auf der Y-Achse ist die Intensität der reflektierten Terahertzstrahlung in beliebigen Einheiten aufgetragen und auf der X-Achse der Drehwinkel der Vorrichtung, insbesondere des Transceivers 20. Es zeigt sich, dass Intensitätsschwankungen von über 20 % auftreten, was durch etwaige Unregelmäßigkeiten des Brechungsindex in dem Material des Kunststoffrohrs nicht zu erklären ist. Tatsächlich liegen diese Schwankungen offenbar in Oberflächeneigenschaften des Kunststoffrohrs begründet, insbesondere einer unregelmäßigen Oberflächentopographie. Dies führt dazu, dass der Einfallswinkel und damit auch der Ausfallswinkel der Terahertzstrahlung je nach Topographie der Oberfläche im Zuge der Rotation des Transceivers 20 variieren, was wiederum zu entsprechenden Schwankungen in der empfangenen Intensität der reflektierten Terahertzstrahlung führt.

Um dieses Problem zu lösen, wird bei der Erfindung ein Maximum der über die gesamte Drehung empfangenen Strahlungsintensität bestimmt und dieses der rechnerischen Bestimmung des Brechungsindex mit der Annahme eines Einfallswinkels von 0° zugrunde gelegt.

Diese Auswertung basiert auf der Annahme, dass bei Auftreten des Intensitätsmaximums der Einfallswinkel im Wesentlichen 0° ist.

Es sind mit der erfindungsgemäßen Vorrichtung aber auch andere Vorgehensweisen zur Berücksichtigung eines Einflusses von Oberflächeneigenschaften des Rohrs 10, insbesondere der Oberflächentopographie des Rohrs 10 möglich. So kann der Transceiver 20 zum Beispiel verschwenkt oder spiralförmig gekreist werden, so dass Terahertzstrahlung auf unterschiedliche Orte auf der äußeren Oberfläche 16 des Rohrs 10 und/oder unter unterschiedlichen Einfallswinkeln auf die äußere Oberfläche 16 des Rohrs 10 ausgesandt wird. Wiederum kann aus den empfangenen reflektierten Strahlungsanteilen das Maximum bestimmt werden und der weiteren Auswertung zur Bestimmung des Brechungsindex zugrunde gelegt werden. Zur Bewegung kann der Transceiver 20 eine in diesen integrierte Verstelleinrichtung aufweisen.

Es kann auch eine Kalibrierung gegenüber dem zu vermessenden Rohr 10 mit einem bekannten Reflexionsgrad, bevorzugt einem Reflexionsgrad von 1, erfolgen. Hierzu kann die Oberfläche des Rohrs 10 zum Beispiel nach der erfindungsgemäßen Bestimmung des Brechungsindex mit einer Beschichtung mit einem bekannten Reflexionsgrad, bevorzugt einem Reflexionsgrad von im Wesentlichen 1, zum Beispiel einer Folienbeschichtung oder einer Sprühbeschichtung, versehen werden und die erfindungsgemäße Messung der reflektierten Terahertzstrahlung erneut durchgeführt werden. Ergibt sich dabei eine Abweichung von der aufgrund des bekannten Reflexionsgrades zu erwartenden reflektierten Strahlungsintensität, kann dies bei der zuvor erfolgten Bestimmung des Brechungsindex nachträglich rechnerisch korrigierend berücksichtigt werden.

Da das Rohr 10, wie in den Figuren 1 und 2 dargestellt, für die ausgesandte Terahertzstrahlung zumindest teilweise durchlässig ist, und die eingestrahlte Terahertzstrahlung somit auch an den weiteren Grenzflächen des Rohrs 10 reflektiert und auch diese weiteren reflektierten Strahlungsanteile von dem Transceiver 20 empfangen werden, kann mit der in den Figuren 1 und 2 gezeigten Vorrichtung auch ein mittlerer Brechungsindex über den Querschnitt des Rohrs 10 bestimmt werden, beispielsweise wie dies in der WO 2016/139155 A1 oder der DE 10 2018 128 248 A1 beschrieben ist. Auf die genannten Druckschriften wird in dieser Hinsicht Bezug genommen.

Auf dieser Grundlage ist auch eine Temperaturbestimmung beispielsweise an der äußeren Oberfläche 16 und/oder der inneren Oberfläche 18 des Rohrs 10 oder auch der mittleren Temperatur über den Querschnitt des Rohrs 10 möglich, wie dies oben erläutert wurde. Sofern zusätzlich zum Beispiel die Temperatur der äußeren Oberfläche 16 mittels einer materialunabhängigen Temperaturmessvorrichtung, zum Beispiel einem Pyrometer, gemessen wird, kann in der oben erläuterten Weise rechnerisch auch ein materialunabhängiger Absolutwert für die Temperatur an der inneren Oberfläche 18 des Rohrs 10 ermittelt werden.

Außerdem kann aus einem Vergleich des bestimmten mittleren Brechungsindex mit dem bestimmten Brechungsindex im Bereich der äußeren Oberfläche 16 des Rohrs 10 auf eine Schrumpfung des Rohrs 10 im Zuge seiner vollständigen Erkaltung und damit vollständigen Aushärtung geschlossen werden.

Auf Grundlage der so ermittelten Brechungsindizes können beispielsweise anhand von Laufzeitmessungen der an den unterschiedlichen Grenzflächen des Rohrs 10 reflektierten Strahlungsanteile weitere Geometrieparameter des Rohrs 10 ermittelt werden. Dies betrifft beispielsweise den in den Figuren bei dem Bezugszeichen 32 gezeigten Außendurchmesser oder die bei den Bezugszeichen 34, 36 gezeigten Wanddicken des Rohrs 10. Die anhand der Laufzeitmessungen bestimmten Werte für die optischen Wanddicken oder den optischen Durchmesser können anhand der ermittelten Werte für den Brechungsindex in an sich bekannter Weise in die geometrischen Wanddicken oder Durchmesser umgerechnet werden.

Die in den Figuren dargestellte Vorrichtung kann sowohl fest installiert sein, zum Beispiel drehbar um das Rohr 10 ausgestaltet, als auch eine tragbare Handheld-Vorrichtung sein.

Bezugszeichenliste

10    Gegenstand / Rohr
12    Wand
14    Hohlraum

16 äußere Oberfläche
18 innere Oberfläche
20 Transceiver
21 Bikonvexlinse
22 Strahlungsoptik
23 Zylinderlinse
25 optische Achse
26 Reflektor
28 Leitung
30 Auswerteeinrichtung
32 Außendurchmesser
34 Wanddicke
36 Wanddicke

**Patentansprüche**

1. Verfahren zum Bestimmen des Brechungsindex im Oberflächenbereich eines erhitzt aus einer Produktionsanlage kommenden, noch nicht vollständig auf Umgebungstemperatur erkalteten strang- oder plattenförmigen Gegenstandes (10), umfassend die folgenden Schritte:

   a) Terahertzstrahlung wird unter einem Einfallswinkel auf die Oberfläche (16) des Gegenstandes (10) ausgesandt,
   b) von der Oberfläche (16) des Gegenstandes (10) reflektierte Terahertzstrahlung wird empfangen,

   **gekennzeichnet durch** die folgenden Schritte:

   c) aus dem Verhältnis von eingestrahlter und reflektierter Terahertzstrahlung wird der Brechungsindex im Oberflächenbereich des Gegenstandes (10) bestimmt,
   d) bei der Bestimmung des Brechungsindex wird ein Einfluss der Oberflächeneigenschaften des Gegenstandes (10) auf den Anteil reflektierter Terahertzstrahlung berücksichtigt, wobei in Schritt d) Terahertzstrahlung auf unterschiedliche Orte auf der Oberfläche (16) des Gegenstandes (10) und/oder unter unterschiedlichen Einfallswinkeln auf die Oberfläche (16) des Gegenstandes (10) ausgesandt wird, wobei die jeweils reflektierte Terahertzstrahlung empfangen wird, und wobei der Brechungsindex aus dem Anteil reflektierter Terahertzstrahlung mit der größten Intensität und/oder aus dem Mittelwert und/oder dem quadratischen Mittelwert der empfangenen reflektierten Terahertzstrahlung bestimmt wird.

2. Verfahren nach Anspruch 1, **dadurch gekennzeichnet, dass** in Schritt d) ein Einfluss der Oberflächentopographie des Gegenstandes (10) berücksichtigt wird.

3. Verfahren nach einem der vorhergehenden Ansprüche, **dadurch gekennzeichnet, dass** in Schritt d) eine Kalibrierung gegenüber einem Gegenstand (10) mit einem bekannten Reflexionsgrad, bevorzugt einem Reflexionsgrad von im Wesentlichen 1, erfolgt.

4. Verfahren nach Anspruch 3, **dadurch gekennzeichnet, dass** die Oberfläche des Gegenstandes (10) für die Kalibrierung mit einer Beschichtung mit einem bekannten Reflexionsgrad, bevorzugt einem Reflexionsgrad von im Wesentlichen 1, versehen wird, vorzugsweise dass die Beschichtung eine Folienbeschichtung oder eine Sprühbeschichtung ist.

5. Verfahren nach einem der vorhergehenden Ansprüche, **dadurch gekennzeichnet, dass** ein Sender (20) für die Terahertzstrahlung während des Aussendens der Terahertzstrahlung um mindestens eine Schwenkachse geschwenkt wird und/oder um den Gegenstand (10) rotiert wird.

6. Verfahren nach einem der vorhergehenden Ansprüche, **dadurch gekennzeichnet, dass** zusätzlich der mittlere Brechungsindex über den Querschnitt des Gegenstandes (10) bestimmt wird, vorzugsweise dass der mittlere Brechungsindex ebenfalls aus auf den Gegenstand (10) ausgesandter und von dem Gegenstand (10) reflektierter Terahertzstrahlung bestimmt wird und/oder dass aus einem Vergleich des mittleren Brechungsindex mit dem Brechungsindex im Oberflächenbereich des Gegenstandes (10) auf eine Schrumpfung des Gegenstandes (10) im Zuge seiner vollständigen Erkaltung auf Umgebungstemperatur geschlossen wird.

7. Verfahren nach einem der vorhergehenden Ansprüche, **dadurch gekennzeichnet, dass** in Schritt d) mit einer Finite-Elemente-Methode und unter Berücksichtigung der Abstrahlcharakteristik eines Senders (20) für die Terahertzstrahlung und des Abstands des Senders (20) zu dem Gegenstand (10) die zu erwartende Intensität der von dem Gegenstand (10) reflektierten Terahertzstrahlung bestimmt wird.

8. Verfahren nach einem der vorhergehenden Ansprüche, **dadurch gekennzeichnet, dass** aus dem bestimmten Brechungsindex im Oberflächenbereich des Gegenstandes (10) die Temperatur im Oberflächenbereich des Gegenstandes (10) bestimmt wird.

9. Verfahren nach einem der vorhergehenden Ansprüche, **dadurch gekennzeichnet, dass** der Gegenstand (10) ein Rohr (10) ist, und dass weiterhin von einer inneren Oberfläche (18) eines Wandabschnitts des Rohrs (10) reflektierte Terahertzstrahlung empfangen wird, und dass aus dem Verhältnis von ein-

gestrahler und von der inneren Oberfläche (18) des Wandabschnitts reflektierter Terahertzstrahlung der Brechungsindex an der inneren Oberfläche (18) des Wandabschnitts bestimmt wird, vorzugsweise dass aus dem Brechungsindex an der inneren Oberfläche (18) des Wandabschnitts die Temperatur an der inneren Oberfläche (18) des Wandabschnitts und/oder eine Temperaturdifferenz und/oder ein Temperaturgradient zwischen der Temperatur der inneren Oberfläche (18) des Wandabschnitts und der Temperatur im Oberflächenbereich des Gegenstandes (10) bestimmt wird.

10. Verfahren nach einem der vorhergehenden Ansprüche, **dadurch gekennzeichnet, dass** der Gegenstand (10) ein aus einer Extrusionsanlage kommender strang- oder plattenförmiger Kunststoffgegenstand (10) ist und/oder dass die Terahertzstrahlung gepulste Terahertzstrahlung oder FMCW- Terahertzstrahlung ist.

11. Vorrichtung zum Bestimmen des Brechungsindex im Oberflächenbereich eines erhitzt aus einer Produktionsanlage kommenden, noch nicht vollständig auf Umgebungstemperatur erkalteten strang- oder plattenförmigen Gegenstandes (10), umfassend:

- einen Sender (20) zum Senden von Terahertzstrahlung unter einem Einfallswinkel auf die Oberfläche (16) des Gegenstandes (10),
- einen Empfänger (20) zum Empfangen der von der Oberfläche (16) des Gegenstandes (10) reflektierten Terahertzstrahlung,
- **gekennzeichnet durch** eine Auswerteeinrichtung (30), die dazu ausgebildet ist, aus dem Verhältnis von eingestrahlter und reflektierter Terahertzstrahlung den Brechungsindex im Oberflächenbereich des Gegenstandes (10) zu bestimmen,
- wobei die Auswerteeinrichtung (30) weiter dazu ausgebildet ist, bei der Bestimmung des Brechungsindex einen Einfluss der Oberflächeneigenschaften des Gegenstandes (10) auf den Anteil reflektierter Terahertzstrahlung zu berücksichtigen,
- wobei weiterhin eine Verstelleinrichtung vorgesehen ist, mit der der Sender (20) zum Aussenden von Terahertzstrahlung auf unterschiedliche Orte auf der Oberfläche des Gegenstandes und/oder unter unterschiedlichen Einfallswinkeln auf die Oberfläche des Gegenstandes verstellbar ist, wobei der Empfänger dazu ausgebildet ist, die jeweils reflektierte Terahertzstrahlung zu empfangen, und dass die Auswerteeinrichtung (30) dazu ausgebildet ist, den Brechungsindex aus dem Anteil reflektierter Terahertzstrahlung mit der größten Intensität und/oder aus dem Mittelwert und/oder dem quadratischen Mittelwert der empfangenen reflektierten Terahertzstrahlung zu bestimmen.

12. Vorrichtung nach Anspruch 11, **dadurch gekennzeichnet, dass** die Verstelleinrichtung eine Einrichtung zum Schwenken des Senders (20) um mindestens eine Schwenkachse und/oder zum Rotieren des Senders (20) um den Gegenstand (10) während des Aussendens der Terahertzstrahlung umfasst.

13. Vorrichtung nach einem der Ansprüche 11 oder 12, **dadurch gekennzeichnet, dass** der Gegenstand (10) ein Rohr (10) ist, und dass der Empfänger (20) dazu ausgebildet ist, weiterhin von einer inneren Oberfläche (18) eines Wandabschnitts des Rohrs (10) reflektierte Terahertzstrahlung zu empfangen, und dass die Auswerteeinrichtung (30) dazu ausgebildet ist, aus dem Anteil reflektierter Terahertzstrahlung und dem bekannten Einfallswinkel den Brechungsindex an der inneren Oberfläche (18) des Wandabschnitts zu bestimmen.

14. Vorrichtung nach einem der Ansprüche 11 bis 13, **dadurch gekennzeichnet, dass** weiterhin eine materialunabhängige Temperaturmesseinrichtung, bevorzugt ein Pyrometer, vorgesehen ist zum Messen der Temperatur im Oberflächenbereich des Gegenstandes (10), und dass die Auswerteeinrichtung (30) dazu ausgebildet ist, aus der gemessenen Temperatur und der bestimmten Temperaturdifferenz zwischen der Temperatur der inneren Oberfläche (18) des Wandabschnitts und der Temperatur im Oberflächenbereich des Gegenstandes (10) die Temperatur an der inneren Oberfläche (18) des Wandabschnitts zu bestimmen.

15. Vorrichtung nach einem der Ansprüche 11 bis 14, **dadurch gekennzeichnet, dass** die Vorrichtung eine Hand-Held-Vorrichtung ist, und/oder dass die Terahertzstrahlung gepulste Terahertzstrahlung oder FMCW-Terahertzstrahlung ist.

16. Vorrichtung nach einem der Ansprüche 11 bis 15, **dadurch gekennzeichnet, dass** die Vorrichtung zur Durchführung des Verfahrens nach einem der Ansprüche 1 bis 10 ausgebildet ist.

**Claims**

1. A method for determining the refractive index in the surface region of a strand-shaped or planar object (10) coming out of a production line in a heated state and not yet completely cooled to ambient temperature, comprising the following steps:

a) terahertz radiation is emitted onto the surface (16) of the object (10) at an angle of incidence,

b) terahertz radiation reflected by the surface (16) of the object (10) is received,

**characterized by** the following steps:

c) the refractive index in the surface region of the object (10) is determined from the ratio of irradiated to reflected terahertz radiation,
d) an influence of the surface properties of the object (10) on the proportion of reflected terahertz radiation is taken into account when determining the refractive index, wherein, in step d), terahertz radiation is emitted onto different locations on the surface (16) of the object (10) and/or at different angles of incidence onto the surface (16) of the object (10), wherein the respectively reflected terahertz radiation is received, and wherein the refractive index is determined from the proportion of reflected terahertz radiation with the highest intensity and/or from the mean and/or the root mean square of the received reflected terahertz radiation.

2. The method according to claim 1, **characterized in that**, in step d), an influence of the surface topography of the object (10) is taken into account.

3. The method according to one of the preceding claims, **characterized in that**, in step d), a calibration takes place against an object (10) with a known reflectance, preferably a reflectance of substantially 1.

4. The method according to claim 3, **characterized in that**, for the calibration, the surface of the object (10) is provided with a coating with a known reflectance, preferably a reflectance of substantially 1, preferably **in that** the coating is a film coating or a spray coating.

5. The method according to one of the preceding claims, **characterized in that** a transmitter (20) for the terahertz radiation is pivoted about at least one pivot axis and/or is rotated about the object (10) when the terahertz radiation is being emitted.

6. The method according to one of the preceding claims, **characterized in that** the mean refractive index over the cross-section of the object (10) is additionally determined, preferably **in that** the mean refractive index is also determined from terahertz radiation emitted onto the object (10) and reflected by the object (10) and/or **in that** a shrinkage of the object (10) during complete cooling thereof to ambient temperature is concluded from a comparison of the mean refractive index with the refractive index in the surface region of the object (10).

7. The method according to one of the preceding claims, **characterized in that**, in step d), the expected intensity of the terahertz radiation reflected by the object (10) is determined using a finite element method and taking into account the radiation characteristics of a transmitter (20) for the terahertz radiation and the distance from the transmitter (20) to the object (10).

8. The method according to one of the preceding claims, **characterized in that** the temperature in the surface region of the object (10) is determined from the determined refractive index in the surface region of the object (10).

9. The method according to one of the preceding claims, **characterized in that** the object (10) is a tube (10), and **in that** terahertz radiation reflected by an inner surface (18) of a wall portion of the tube (10) is further received, and **in that** the refractive index at the inner surface (18) of the wall portion is determined from the ratio of irradiated terahertz radiation to terahertz radiation reflected by the inner surface (18) of the wall portion, preferably **in that** the temperature at the inner surface (18) of the wall portion and/or a temperature difference and/or a temperature gradient between the temperature of the inner surface (18) of the wall portion and the temperature in the surface region of the object (10) is determined from the refractive index at the inner surface (18) of the wall portion.

10. The method according to one of the preceding claims, **characterized in that** the object (10) is a strand-shaped or planar plastic object (10) coming out of an extrusion line and/or **in that** the terahertz radiation is pulsed terahertz radiation or FMCW terahertz radiation.

11. A device for determining the refractive index in the surface region of a strand-shaped or planar object (10) coming out of a production line in a heated state and not yet completely cooled to ambient temperature, comprising:

- a transmitter (20) for transmitting terahertz radiation at an angle of incidence onto the surface (16) of the object (10),
- a receiver (20) for receiving the terahertz radiation reflected by the surface (16) of the object (10),
- **characterized by** an evaluation apparatus (30), which is designed to determine the refractive index in the surface region of the object (10) from the ratio of irradiated to reflected terahertz radiation,
- wherein the evaluation apparatus (30) is further designed to take into account an influence of the surface properties of the object (10) on the proportion of reflected terahertz radiation during determination of the refractive index,

- wherein an adjustment apparatus is further provided, by means of which the transmitter (20) can be adjusted to emit terahertz radiation onto different locations on the surface of the object and/or at different angles of incidence onto the surface of the object, wherein the receiver is designed to receive the respectively reflected terahertz radiation, and in that the evaluation apparatus (30) is designed to determine the refractive index from the proportion of reflected terahertz radiation with the highest intensity and/or from the mean and/or the root mean square of the received reflected terahertz radiation.

12. The device according to claim 11, **characterized in that** the adjustment apparatus comprises an apparatus for pivoting the transmitter (20) about at least one pivot axis and/or for rotating the transmitter (20) about the object (10) when the terahertz radiation is being emitted.

13. The device according to one of claims 11 or 12, **characterized in that** the object (10) is a tube (10), and **in that** the receiver (20) is designed to further receive terahertz radiation reflected by an inner surface (18) of a wall portion of the tube (10), and **in that** the evaluation apparatus (30) is designed to determine the refractive index at the inner surface (18) of the wall portion from the proportion of reflected terahertz radiation and the known angle of incidence.

14. The device according to one of claims 11 to 13, **characterized in that** a material-independent temperature measuring apparatus, preferably a pyrometer, is further provided for measuring the temperature in the surface region of the object (10), and **in that** the evaluation apparatus (30) is designed to determine the temperature at the inner surface (18) of the wall portion from the measured temperature and the determined temperature difference between the temperature of the inner surface (18) of the wall portion and the temperature in the surface region of the object (10).

15. The device according to one of claims 11 to 14, **characterized in that** the device is a handheld device, and/or **in that** the terahertz radiation is pulsed terahertz radiation or FMCW terahertz radiation.

16. The device according to one of claims 11 to 15, **characterized in that** the device is designed to carry out the method according to one of claims 1 to 10.

**Revendications**

1. Procédé de détermination de l'indice de réfraction dans la zone de surface d'un objet (10) en forme de cordon ou de plaque pas encore complètement refroidi à une température ambiante, provenant d'une installation de production à l'état chauffé, comportant les étapes suivantes :

   a) un rayonnement térahertz est émis vers la surface (16) de l'objet (10) sous un angle d'incidence,
   b) un rayonnement térahertz réfléchi par la surface (16) de l'objet (10) est reçu,

   **caractérisé par** les étapes suivantes :

   c) l'indice de réfraction est déterminé dans la zone de surface de l'objet (10) à partir du rapport du rayonnement térahertz rayonné et réfléchi,
   d) une influence des propriétés de surface de l'objet (10) sur la part du rayonnement térahertz réfléchi est prise en compte lors de la détermination de l'indice de réfraction, dans lequel, dans l'étape d), un rayonnement térahertz est émis vers différents endroits à la surface (16) de l'objet (10) et/ou sous différents angles d'incidence vers la surface (16) de l'objet (10), dans lequel le rayonnement térahertz réfléchi respectivement est reçu, et dans lequel l'indice de réfraction est déterminé à partir de la part du rayonnement térahertz réfléchi avec la plus grande intensité et/ou à partir de la valeur moyenne et/ou de la valeur moyenne carrée du rayonnement térahertz réfléchi reçu.

2. Procédé selon la revendication 1, **caractérisé en ce que** dans l'étape d), une influence de la topographie de surface de l'objet (10) est prise en compte.

3. Procédé selon l'une des revendications précédentes, **caractérisé en ce que** dans l'étape d), un étalonnage est effectué par rapport à un objet (10) présentant une réflectivité connue, de préférence une réflectivité sensiblement de 1.

4. Procédé selon la revendication 3, **caractérisé en ce que** pour l'étalonnage, la surface de l'objet (10) est pourvue d'un revêtement présentant une réflexivité connue, de préférence une réflexivité sensiblement de 1, préférentiellement **en ce que** le revêtement est un revêtement sous forme de film ou un revêtement par pulvérisation.

5. Procédé selon l'une des revendications précédentes, **caractérisé en ce qu'**un émetteur (20) destiné au rayonnement térahertz est pivoté autour d'au moins un axe de pivotement et/ou mis en rotation autour de l'objet (10) pendant l'émission du rayonnement térahertz.

6. Procédé selon l'une des revendications précédentes, **caractérisé en ce que** l'indice de réfraction moyen est en outre déterminé sur la section transversale de l'objet (10), préférentiellement **en ce que** l'indice de réfraction moyen est également déterminé à partir du rayonnement térahertz émis vers l'objet (10) et réfléchi par l'objet (10) et/ou **en ce qu'**un rétrécissement de l'objet (10) au cours de son refroidissement complet à température ambiante est supposé à partir d'une comparaison de l'indice de réfraction moyen avec l'indice de réfraction dans la zone de surface de l'objet (10).

7. Procédé selon l'une des revendications précédentes, **caractérisé en ce que** dans l'étape d), l'intensité attendue du rayonnement térahertz réfléchi par l'objet (10) est déterminée à l'aide de la méthode des éléments finis et en tenant compte de la caractéristique de rayonnement d'un émetteur (20) pour le rayonnement térahertz et de la distance de l'émetteur (20) à l'objet (10).

8. Procédé selon l'une des revendications précédentes, **caractérisé en ce que** la température dans la zone de surface de l'objet (10) est déterminée à partir de l'indice de réfraction déterminé dans la zone de surface de l'objet (10).

9. Procédé selon l'une des revendications précédentes, **caractérisé en ce que** l'objet (10) est un tube (10), et **en ce qu'**un rayonnement térahertz réfléchi par une surface intérieure (18) d'une section de paroi du tube (10) est également reçu, et **en ce que** l'indice de réfraction au niveau de la surface intérieure (18) de la section de paroi est déterminé à partir du rapport du rayonnement térahertz rayonné et réfléchi par la surface intérieure (18) de la section de paroi, préférentiellement **en ce que** la température au niveau de la surface intérieure (18) de la section de paroi et/ou une différence de température et/ou un gradient de température entre la température de la surface intérieure (18) de la section de paroi et la température dans la zone de surface de l'objet (10) sont déterminés à partir de l'indice de réfraction au niveau de la surface intérieure (18) de la section de paroi.

10. Procédé selon l'une des revendications précédentes, **caractérisé en ce que** l'objet (10) est un objet en plastique en forme de cordon ou de plaque (10) provenant d'une installation d'extrusion et/ou **en ce que** le rayonnement térahertz est un rayonnement térahertz pulsé ou un rayonnement térahertz FMCW.

11. Dispositif de détermination de l'indice de réfraction dans la zone de surface d'un objet (10) en forme de cordon ou de plaque pas encore complètement refroidi à une température ambiante, provenant d'une installation de production à l'état chauffé, comportant :

   - un émetteur (20) pour l'émission d'un rayonnement térahertz vers la surface (16) de l'objet (10) sous un angle d'incidence,
   - un récepteur (20) pour la réception du rayonnement térahertz réfléchi par la surface (16) de l'objet (10),
   - **caractérisé par** un dispositif d'évaluation (30) conçu pour déterminer l'indice de réfraction dans la zone de surface de l'objet (10) à partir du rapport du rayonnement térahertz rayonné et réfléchi,
   - dans lequel, lors de la détermination de l'indice de réfraction, le dispositif d'évaluation (30) est en outre conçu pour tenir compte d'une influence des propriétés de surface de l'objet (10) sur la part du rayonnement térahertz réfléchi,
   - dans lequel il est également prévu un dispositif de réglage avec lequel l'émetteur (20) destiné à émettre un rayonnement térahertz peut être réglé sur différents endroits à la surface de l'objet et/ou sous différents angles d'incidence à la surface de l'objet, dans lequel le récepteur est conçu pour recevoir le rayonnement térahertz réfléchi respectivement, et en ce que le dispositif d'évaluation (30) est conçu pour déterminer l'indice de réfraction à partir de la part du rayonnement térahertz réfléchi avec la plus grande intensité et/ou à partir de la valeur moyenne et/ou de la valeur moyenne carrée du rayonnement térahertz réfléchi reçu.

12. Dispositif selon la revendication 11, **caractérisé en ce que** le dispositif de réglage comporte un dispositif destiné à faire pivoter l'émetteur (20) autour d'au moins un axe de pivotement et/ou à mettre l'émetteur (20) en rotation autour de l'objet (10) pendant l'émission du rayonnement térahertz.

13. Dispositif selon l'une des revendications 11 ou 12, **caractérisé en ce que** l'objet (10) est un tube (10), et **en ce que** le récepteur (20) est conçu pour recevoir également un rayonnement térahertz réfléchi par une surface intérieure (18) d'une section de paroi du tube (10), et **en ce que** le dispositif d'évaluation (30) est conçu pour déterminer l'indice de réfraction au niveau de la surface intérieure (18) de la section de paroi à partir de la part de rayonnement térahertz réfléchi et de l'angle d'incidence connu.

14. Dispositif selon l'une des revendications 11 à 13, **caractérisé en ce qu'**il est également prévu un dispositif de mesure de température indépendant du matériau, de préférence un pyromètre, pour la mesure de la température dans la zone de surface de l'objet (10), et **en ce que** le dispositif d'évaluation (30) est conçu pour déterminer la température au niveau de la surface intérieure (18) de la section de paroi à partir de la température mesurée et de la différence de température déterminée entre la température de la surface intérieure (18) de la section de paroi et la température dans la zone de surface de l'objet (10).

15. Dispositif selon l'une des revendications 11 à 14, **caractérisé en ce que** le dispositif est un dispositif portatif, et/ou **en ce que** le rayonnement térahertz est un rayonnement térahertz pulsé ou un rayonnement térahertz FMCW.

16. Dispositif selon l'une des revendications 11 à 15, **caractérisé en ce que** le dispositif est conçu pour la mise en œuvre du procédé selon l'une des revendications 1 à 10.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016139155 A1
- DE 102018128248 A1
- WO 2017000933 A1